# EUROPÄISCHE PATENTANMELDUNG

(11) **EP 2 166 234 A1**
(43) Veröffentlichungstag der Anmeldung: **24.03.2010**
(21) Anmeldenummer: 09010533.9
(22) Anmeldetag: 17.08.2009
(51) Int. Cl.: F16B 7/14

(54) **Grablaterne**

(30) Priorität: 23.09.2008 DE 202008013325 U
(71) Anmelder: Ernst Strassacker GmbH & Co. KG Kunstgiesserei, 73079 Süssen (DE)
(72) Erfinder: Hans, Wolfgang, 73054 Eislingen (DE); Blumenstock, Karin, 73079 Süssen (DE)
(74) Vertreter: Wilhelm, Martin

(57) **Zusammenfassung**

Die Erfindung betrifft eine Grablaterne mit einem Laternenkörper sowie einem Laternenfuß, bei der der Laternenfuß (10) wenigstens zwei teleskopartig ineinandersteckbare Rohre (12,14) aufweist und eine Arretiervorrichtung vorgesehen ist, um das erste und das zweite Rohr (12,14) in unterschiedlich weit ausgezogenen Stellungen relativ zueinander zu fixieren.

## Beschreibung

Die Erfindung betrifft eine Grablaterne mit einem Laternenkörper sowie einem Laternenfuß.

Grablaternen werden üblicherweise auf einem Grabstein dadurch angeordnet, dass sie fest an den Grabstein angeschraubt werden. Eine solche Anordnung der Grablaterne ist einfach, kann aber nicht an die Umgebung angepasst werden. So verschwindet die Grablaterne beispielsweise unter hoch wachsenden Pflanzen in ihrer Umgebung oder im Winter unter einer Schneedecke.

Der Erfindung liegt die Aufgabe zugrunde eine flexibel einsetzbare Grablaterne bereitzustellen.

Erfindungsgemäß ist hierzu eine Grablaterne mit einem Laternenkörper sowie einem Laternenfuß vorgesehen, wobei der Laternenfuß wenigstens zwei teleskopartig ineinander steckbare Rohre aufweist, wobei ein erstes Rohr am Laternenkörper und ein zweites Rohr an einer Bodenfläche fixierbar ist, und wobei eine Arretiervorrichtung vorgesehen ist, um das erste und das zweite Rohr in unterschiedlich weit ausgezogenen Stellungen relativ zueinander zu fixieren.

Durch diese Maßnahmen kann der Laternenkörper in seiner Höhe über dem Erdboden oder einem Grabstein eingestellt werden. Auf diese Weise kann die Grablaterne beispielsweise immer auf Höhe oder leicht über der Oberkante einer benachbarten Bepflanzung gehalten werden. Speziell im Winter und bei großem Schneefall ist es möglich, die Grablaterne immer oberhalb der Schneeoberfläche zu halten. Der Aufbau der erfindungsgemäßen Grablaterne ist dabei konstruktiv einfach, da zur Höhenverstellung zwei teleskopartig ineinander steckbare Rohre vorgesehen sind, die mittels einer Arretiervorrichtung in unterschiedlich weit ausgezogenen Stellungen relativ zueinander fixiert werden können. In der vollständig eingeschobenen Stellung der beiden Rohre ist die Grablaterne nicht von einer konventionellen, nicht in der Höhe einstellbaren Grablaterne zu unterscheiden.

In Weiterbildung der Erfindung weist das zweite Rohr eine kegelartige Spitze mit einer Durchgangsöffnung auf.

Auf diese Weise kann das zweite Rohr beispielsweise als sogenannter Erdspieß genutzt werden und in einfacher Weise in das Erdreich vorgetrieben werden. Selbstverständlich ist aber auch die Anordnung des zweiten Rohres in einem geeigneten Fundament möglich. Indem in der kegelartigen Spitze eine Durchgangsöffnung vorgesehen ist, kann Kondenswasser oder in das zweite Rohr eindringendes Wasser wieder ablaufen. Dies ist vor allem im Winter von Bedeutung, wenn eindringendes Wasser gefrieren kann und die Teleskopanordnung blockieren könnte.

In Weiterbildung der Erfindung weist die Arretiervorrichtung wenigstens eine Spreizvorrichtung auf.

Auf diese Weise können die beiden teleskopartig ineinander steckbaren Rohre in einfacher Weise aneinander arretiert werden. Vor allem kann die Spreizvorrichtung am inneren Rohr der Teleskopvorrichtung angeordnet werden, so dass diese von außen unsichtbar ist. Dadurch ist die Spreizvorrichtung zum einen gegenüber Umwelteinflüssen und Verschmutzung geschützt und zum anderen entsteht eine optisch ansprechende Gestaltung der Teleskopvorrichtung.

In Weiterbildung der Erfindung weist die Spreizvorrichtung wenigstens ein Keilelement und eine Spreizhülse auf.

Auf diese Weise kann durch relative Verschiebung des Keilelements und der Spreizhülse das innere Rohr am äußeren Rohr arretiert werden. Das Keilelement kann beispielsweise mittels Hebelwirkung oder mittels einer Gewindestange relativ zur Spreizhülse verschoben werden.

In Weiterbildung der Erfindung ist die Spreizvorrichtung an dem ersten, am Laternenkörper fixierbaren Rohr vorgesehen und ist in dem zweiten, an der Bodenfläche fixierbaren Rohr aufgenommen.

Auf diese Weise ist die Spreizvorrichtung gegen Verschmutzung geschützt und das am Laternenkörper fixierte Rohr wird in das fest an der Bodenfläche fixierte Rohr eingeschoben. Das an der Bodenfläche fixierte Rohr ist damit stets durch das am Laternenkörper fixierte Rohr verschlossen und dadurch kann zuverlässig verhindert werden, dass Feuchtigkeit oder Verschmutzung in das am Boden fixierte Rohr eindringt. Selbstverständlich kann eine Gleitdichtung zwischen den beiden Rohren vorgesehen sein, um die Abdichtung weiter zu verbessern.

In Weiterbildung der Erfindung ist das Keilelement drehbar auf einer am ersten Rohr fixierten Gewindestange angeordnet.

Auf diese Weise kann das Keilelement in sehr einfacher Weise durch Verdrehen der beiden Rohre zueinander relativ zur Spreizhülse verschoben werden.

In Weiterbildung der Erfindung weist die Spreizhülse mehrere Spreizelemente auf, die mittels eines Federrings miteinander verbunden sind.

Auf diese Weise kann eine konstruktiv einfache und zuverlässige Spreizvorrichtung bereitgestellt werden.

In Weiterbildung der Erfindung weist die Arretiervorrichtung wenigstens eine Spreizvorrichtung auf und wenigstens eines der Rohre weist einen sich in seinen Innenraum erstreckenden Vorsprung auf, an dem die Spreizvorrichtung angreift. Auf diese Weise kann sichergestellt werden, dass ein relatives Verdrehen der Spreizvorrichtung gegenüber einem der beiden Rohre möglich ist. Beispielsweise verhaken sich die Spreizelemente an dem Vorsprung und blockieren dadurch gleichzeitig wenigstens ein Keilelement. Eine am ersten Rohr fixierte Gewindestange kann dann relativ zu dem Keilelement verdreht werden, so dass dieses sich relativ zu den Spreizelementen verschiebt und diese nach außen, gegen die Innenwand des zweiten Rohres drückt. Bei längs geschweißten Rohren kann ein sich in den Innenraum des Rohres hinein erstreckender Abschnitt der Schweißnaht als Vorsprung genutzt werden, um die Spreizvorrichtung gegen Rotation im Rohr zu sichern.

In Weiterbildung der Erfindung erstreckt sich der Vorsprung schraubenförmig oder parallel zur Längsachse des Rohres.

Sowohl mit einem sich schraubenförmig erstreckenden Vorsprung als auch mit einem sich parallel zur Längsachse des Rohres erstreckenden Vorsprung kann die Spreizvorrichtung gegenüber einer Drehung relativ zu den Rohren fixiert werden und dennoch kann die Spreizvorrichtung noch im Innenraum des Rohres in Längsrichtung verschoben werden, um die teleskopartige Verstellung der beiden ineinandergesteckten Rohre zu ermöglichen.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: einen Laternenfuß für eine Grablaterne gemäß der Erfindung in einer Verschiebestellung und
- Fig. 2: eine abschnittsweise Darstellung des Laternenfußes der Fig. 1 in einer Arretierstellung.

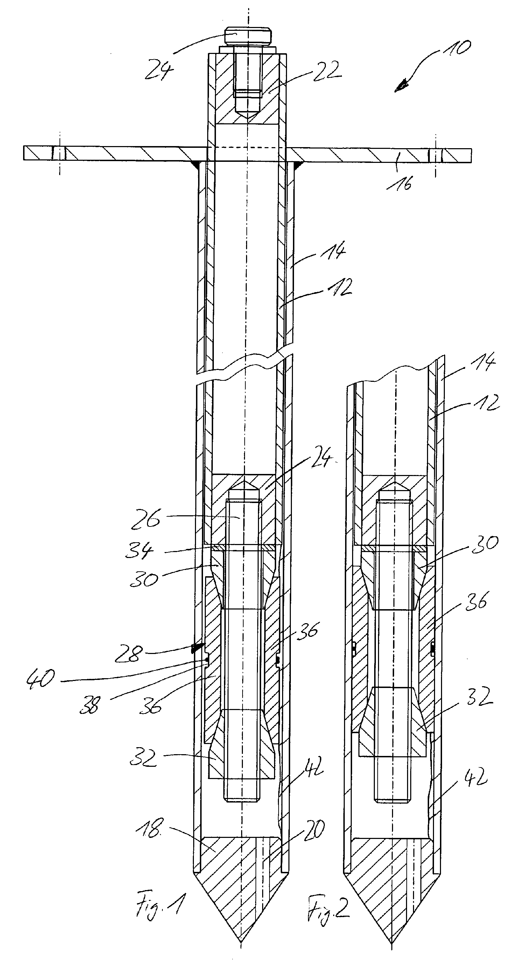

Die Darstellung der Fig. 1 zeigt eine abschnittsweise Schnittansicht eines Laternenfußes 10, der ein erstes Rohr 12 und ein zweites Rohr 14 aufweist. Das zweite Rohr 14 ist als sogenanntes Bodenrohr ausgebildet und ist an seinem in Fig. 1 oberen Ende mit einem Befestigungsflansch 16 verschweißt. Der Befestigungsflansch erstreckt sich senkrecht zur Längsachse des zweiten Rohres 14. An seinem, dem Befestigungsflansch 16 gegenüberliegenden unteren Ende ist das zweite Rohr 14 mit einer Kegelspitze 18 versehen, die einen Kegelabschnitt und einen Zylinderabschnitt aufweist. Ein Durchmesser am Fuß des Kegelabschnitts entspricht exakt dem Außendurchmesser des zweiten Rohres 14. Der Außendurchmesser des Kegelabschnitts entspricht dem Innendurchmesser des zweiten Rohres 14, so dass zwischen Kegelabschnitt und Zylinderabschnitt ein umlaufender Absatz ausgebildet ist. Die Kegelspitze 18 wird in das zweite Rohr 14 eingeschoben, bis dessen Stirnseite an dem umlaufenden Absatz anliegt. Der Durchmesser des Zylinderabschnitts kann dabei so bemessen sein, dass die Kegelspitze 18 mittels einer Presspassung sicher in dem zweiten Rohr 14 fixiert ist. Die Kegelspitze 18 weist eine Durchgangsbohrung 20 auf, die den Innenraum des zweiten Rohres 14 mit der Umgebung verbindet. Die Durchgangsbohrung 20 ist versetzt zu einer Mittellängsachse der Kegelspitze 18 angeordnet. Über die Durchgangsbohrung 20 kann gegebenenfalls in den Innenraum des zweiten Rohres 14 eingedrungenes Wasser wieder abfließen. Die versetzte Anordnung der Durchgangsbohrung verhindert dabei weitgehend, dass beim Einschieben des zweiten Rohres 14 in das Erdreich oder ein Fundament große Mengen an Schmutz in die Durchgangsbohrung 20 eindringen. Beispielsweise kann das zweite Rohr 14 in einer Bohrung eines Fundaments versenkt werden und der Befestigungsflansch 16 wird auf der Oberseite des Fundaments mittels Schrauben befestigt.

Das erste Rohr 12 ist an seinem, in der Fig. 1 oberen Ende, das aus dem zweiten Rohr 14 herausragt, mit einem Verschlussstopfen 22 versehen, der eine Gewindebohrung aufweist. Der Verschlussstopfen 22 kann beispielsweise mittels einer Presspassung im ersten Rohr 12 aufgenommen sein. Mittels der Gewindebohrung im Verschlussstopfen 22 und einer Befestigungsschraube 24 kann ein nicht dargestellter Laternenkörper an dem ersten Rohr 12 befestigt werden.

An seinem, in der Fig. 1 unteren Ende, das in dem zweiten Rohr 14 aufgenommen ist, ist das erste Rohr 12 ebenfalls mit einem Verschlussstopfen 24 versehen, der ebenfalls mit einer Gewindebohrung versehen ist. In die Gewindebohrung ist eine Gewindestange 26 eingeschraubt, die sich über das Ende des ersten Rohres 12 in das zweite Rohr 14 hinein erstreckt. Die Gewindestange 26 ist drehfest mit dem Verschlussstopfen 24 und damit dem ersten Rohr 12 verbunden.

Auf der Gewindestange 26 ist eine Spreizvorrichtung mit einer Spreizhülse 28 und zwei Keilelementen 30 und 32 vorgesehen. Das erste Keilelement 30 liegt unter Zwischenfügung einer Beilagscheibe 34 an der Stirnseite des ersten Rohres 12 bzw. an der Stirnseite des Verschlussstopfens 24 an. Das erste Keilelement 30 weist eine Durchgangsbohrung mit größerem Durchmesser als der Außendurchmesser der Gewindestange 26 auf und ist dadurch nicht in Eingriff mit dem Gewinde der Gewindestange 26, sondern kann auf dieser frei verdreht werden. Am freien Ende der Gewindestange 26 ist das zweite Keilelement 32 angeordnet, das mit einer zur Gewindestange 26 passenden Innengewindebohrung versehen ist. Werden die Gewindestange 26 und das zweite Keilelement 32 daher relativ zueinander verdreht, bewegt sich das Keilelement 32 entlang der Gewindestange 26.

Die Spreizhülse 28 weist mehrere Spreizelemente 36 auf, die leistenförmig ausgebildet sind und an gegenüber liegenden, jeweils den Keilelementen 30, 32 zugewandten Enden abgeschrägt sind. Die abgeschrägten Enden der Spreizelemente 36 können dadurch auf den kegelstumpfförmigen Außenflächen der Keilelemente 30, 32 entlang gleiten. Wird ein Abstand der beiden Keilelemente 30, 32 zueinander verändert, bewegen sich infolgedessen die Spreizelemente 36 nach außen bzw. innen. Die Spreizelemente 36 weisen jeweils eine Mittelnut 38 auf, in der ein Federring 40 aufgenommen ist. Der Federring 40 umgibt alle Keilelemente 36 und spannt diese dadurch gegen die Keilelemente 30, 32 vor. Zusammen mit dem Federring 40 bilden die Keilelemente 36 dadurch die Spreizhülse 28.

In der Darstellung der Fig. 1 befindet sich die Spreizvorrichtung in einer Stellung, in der die Außenflächen der Spreizelemente 36 von der Innenwand des zweiten Rohres 14 beabstandet sind und das erste Rohr 12 dadurch innerhalb des zweiten Rohres 14 verschoben werden kann. Ausgehend von der in Fig. 1 dargestellten Stellung kann das erste Rohr 12 daher ausgezogen werden, um einen auf dem ersten Rohr 12 befestigten Laternenkörper in eine gewünschte Höhe zu bringen. Sobald die gewünschte Höhe und damit die gewünschte relative Stellung von erstem Rohr 12 und zweitem Rohr 14 erreicht ist, wird das erste Rohr 12 im Uhrzeigersinn gegen das zweite Rohr 14 verdreht. Die Spreizhülse 28 vergrößert dadurch ihren Außendurchmesser bis die Keilelemente 36 an der Innenwand des zweiten Rohres 14 anliegen. Sobald die Spreizelemente 36 dann ausreichend fest gegen die Innenwand des zweiten Rohres 14 gepresst sind, sind das zweite Rohr 14 und das erste Rohr 12 aneinander fixiert.

Eine relative Verdrehung der Spreizhülse 28 mit den Keilelementen 36 wird dabei dadurch erreicht, dass das zweite Rohr 14 mit einem in den Innenraum hinein ragenden Vorsprung 42 versehen ist, der sich im Wesentlichen parallel zu einer Mittellängsachse der beiden Rohre 12, 14 erstreckt. Dieser Vorsprung 42 ist in der Darstellung der Fig. 1 lediglich schematisch dargestellt. Der Vorsprung 42 verhindert, dass sich die Keilelemente 36 bei einer Drehung des ersten Rohres 12 mit drehen. Dadurch wird auch ein Mitdrehen des zweiten Keilelements 32 verhindert, so dass die Gewindestange 26 relativ zum zweiten Keilelement 32 verdreht wird und dieses dadurch in Richtung auf das erste Keilelement 30 zu bewegt wird. Dadurch werden die Keilelemente nach außen gedrückt und sorgen für eine Fixierung des ersten Rohres 12 und des zweiten Rohres 14 relativ zueinander.

Auch bei einer Drehung des ersten Rohres 12 im Gegenuhrzeigersinn verhaken die Keilelemente 36 wieder an dem Vorsprung 42, so dass eine relative Drehung von Gewindestange 26 und zweitem Keilelement 32 erreicht wird. Das zweite Keilelement 32 entfernt sich dadurch von dem ersten Keilelement 30 und die Spreizelemente 36 können sich, vorgespannt von der Ringfeder 40, wieder nach innen bewegen. Sobald die Spreizelemente 36 dann ausgehend von der in Fig. 2 dargestellten Stellung wieder die in Fig. 1 dargestellte Stellung erreicht haben, können die beiden Rohre 12, 14 wieder relativ zueinander verschoben werden.

Der Vorsprung 42 ist dabei durch die Innenseite einer Schweißnaht des zweiten Rohres 14 gebildet. Überraschenderweise hat sich herausgestellt, dass der sich in den Innenraum längs geschweißter Rohre hinein erstreckende Abschnitt der Schweißnaht ausreichend weit in den Innenraum vorragt, um die Keilelemente 36 festzuhalten, wenn das erste Rohr 12 relativ zum zweiten Rohr 14 verdreht wird.

Mit der Erfindung wird dadurch eine konstruktiv einfache, leicht zu bedienende und dabei zuverlässige Grablaterne geschaffen, die in der Höhe über einer Bodenfläche eingestellt und fixiert werden kann.

## Patentansprüche

1. Grablaterne mit einem Laternenkörper sowie einem Laternenfuß, **dadurch gekennzeichnet, dass** der Laternenfuß (10) wenigstens zwei teleskopartig ineinandersteckbare Rohre (12, 14) aufweist, wobei ein erstes Rohr (12) am Laternenkörper und ein zweites Rohr (14) an einer Bodenfläche fixierbar ist, und dass eine Arretiervorrichtung vorgesehen ist, um das erste und das zweite Rohr (12, 14) in unterschiedlich weit ausgezogenen Stellungen relativ zueinander zu fixieren.

2. Grablaterne nach Anspruch 1, **dadurch gekennzeichnet, dass** das zweite Rohr (14) eine kegelartige Spitze (18) mit einer Durchgangsbohrung (20) aufweist.

3. Grablaterne nach Anspruch 1 oder 2, **dadurch gekennzeichnet, dass** die Arretiervorrichtung wenigstens eine Spreizvorrichtung aufweist.

4. Grablaterne nach Anspruch 3, **dadurch gekennzeichnet, dass** die Spreizvorrichtung wenigstens ein Keilelement (30, 32) und eine Spreizhülse (28) aufweist.

5. Grablaterne nach Anspruch 3 oder 4, **dadurch gekennzeichnet, dass** die Spreizvorrichtung an dem ersten, am Laternenkörper fixierbaren Rohr (12) vorgesehen und in dem zweiten, an der Bodenfläche fixierbaren Rohr (14) aufgenommen ist.

6. Grablaterne nach Anspruch 3, 4 oder 5, **dadurch gekennzeichnet, dass** das wenigstens eine Keilelement (30, 32) drehbar auf einer am ersten Rohr (12) fixierten Gewindestange (26) angeordnet ist.

7. Grablaterne nach einem der Ansprüche 3 bis 6, **dadurch gekennzeichnet, dass** die Spreizhülse (28) mehrere Spreizelemente (36) aufweist, die mittels eines Federrings (40) miteinander verbunden sind.

8. Grablaterne nach einem der vorstehenden Ansprüche, **dadurch gekennzeichnet, dass** die Arretiervorrichtung wenigstens eine Spreizvorrichtung und wenigstens eines der Rohre (14) einen sich in seinen Innenraum erstreckenden Vorsprung (42) aufweist, an dem die Spreizvorrichtung angreift.

9. Grablaterne nach Anspruch 8, **dadurch gekennzeichnet, dass** der Vorsprung (42) sich schraubenförmig oder parallel zur Längsachse des Rohres (14) erstreckt.
